# EUROPÄISCHE PATENTSCHRIFT

(11) **EP 0 907 097 B1**
(45) Veröffentlichungstag und Bekanntmachung des Hinweises auf die Patenterteilung: **29.11.2006**
(21) Anmeldenummer: 98114079.1
(22) Anmeldetag: 28.07.1998
(51) Int. Cl.: G02F 1/39

(54) **Optisch-parametrischer Oszillator**
Optical parametric oscillator
Oscillateur paramétrique optique

(30) Priorität: 25.09.1997 DE 19742362
(43) Veröffentlichungstag der Anmeldung: 07.04.1999
(73) Patentinhaber: Wallenstein, Richard, Prof. Dr., 67271 Neuleiningen (DE)
(72) Erfinder: Wallenstein, Richard, Prof. Dr., 67269 Grünstadt (DE); Anstett, Gregor, 67663 Kaiserslautern (DE); Urschel, Rainer, 67661 Kaiserlautern-Siegelbach (DE); Borsutzky, Annette, 67657 Kaiserslautern (DE)
(74) Vertreter: von Hellfeld, Axel

(56) Entgegenhaltungen:
- DE-A- 19 511 785
- US-A- 5 400 173
- NABORS C D ET AL: "Optical parametric oscillator with bi-noncolinear, porro prism cavity" OSA TRENDS IN OPTICS AND PHOTONICS SERIES. VOL.10 ADVANCED SOLID STATE LASERS. FROM THE TOPICAL MEETING, OSA TRENDS IN OPTICS AND PHOTONICS SERIES. VOL.10 ADVANCED SOLID STATE LASERS FROM THE TOPICAL MEETING, ORLANDO, FL, USA, 27-29 JAN. 1997, Seiten 90-93, XP002134920 1997, Washington, DC, USA, Opt. Soc. America, USA ISBN: 1-55752-468-8
- WU S ET AL: "SIMPLE, HIGH-PERFORMANCE TYPE II BETA-BAB2O4 OPTICAL PARAMETRIC OSCILLATOR" APPLIED OPTICS,US,OPTICAL SOCIETY OF AMERICA,WASHINGTON, Bd. 36, Nr. 24, 20. August 1997 (1997-08-20), Seiten 5898-5901, XP000699710 ISSN: 0003-6935

## Beschreibung

Die Erfindung betrifft die Verwendung eines optisch-parametrischen Oszillators (OPO) mit den Merkmalen des Oberbegriffs des Patentanspruches 1, gemäß dem Aufsatz von C.D. Nabors und G. Frangineas, OSA Trends in Optics and Photonics, Vol. 10, Advanced Solid State Lasers.

Optisch-parametrische Oszillatoren (OPO) sind seit 1965 bekannt [J.A. Giordmaine and R.C. Miller, Phys.Rev.Lett.14,973 (1965)]. Die physikalischen Eigenschaften waren Gegenstand detaillierter theoretischer und experimenteller Untersuchungen [R.L. Byer, "Optical parametric oscillators" in Quantum Electronics Vol.1, Part B, H. Rabin and C.L. Tang, eds. (Academic Press), pp.587-702(1975)].

Der OPO ist eine Quelle kohärenter Strahlung, die in einem weiten Wellenlängenbereich abstimmbar ist. Der OPO enthält als wesentliche Komponenten einen optischen Resonator aus zwei planen Spiegeln in paralleler Aufstellung. Ein Kristall ist zwischen diesen Spiegeln angeordnet und gegebenenfalls um eine Achse senkrecht zur optischen Achse des Resonators drehbar.

Der OPO wird angeregt mit kohärenter Strahlung (der sogenannten Pumpstrahlung), die bevorzugt von gepulsten oder kontinuierlich arbeitenden Lasern erzeugt wird. Die Ausgangsstrahlung des OPO besteht aus einer sogenannten Signalwelle und einer sogenannten Idlerwelle. Gemäß dem Energieerhaltungssatz gilt für die Frequenzen der Pumpstrahlung (ωₚ) sowie der erzeugten Signal- und Idlerstrahlung (ωₛ bzw. (ωᵢ): ωₚ = ωₛ + ωᵢ. Der Resonator des OPO ist in der Regel für die Signal- oder die Idlerwelle resonant. In Abhängigkeit von der Wellenlänge der Pumpstrahlung sowie der kristallographischen Orientierung (d.h. vom Drehwinkel) des Kristalls sind die Wellenlängen von Signal- und Idlerwelle variierbar.

Die Orientierung der Polarisation von Signalwelle und Idlerwelle sind vom Typ der Phasenanpassung im optisch nichtlinearen Kristall abhängig. Bei der sogenannten Typ-I Phasenanpassung sind die Polarisationen der Signalwelle und Idlerwelle zueinander parallel, bei der sogenannten Typ-II Phasenanpassung stehen die Polarisationen senkrecht zueinander.

Die räumlichen Strahleigenschaften (d.h. die Strahlqualität) eines gepulsten OPO (d.h. eines OPO, der mit einer gepulsten Strahlungsquelle angeregt wird) werden vor allem durch die räumlichen und spektralen Eigenschaften der Pumpstrahlung sowie die Geometrie des OPO-Resonators bestimmt. Bei Verwendung eines plan-plan Resonators und eines räumlich homogenen Pumpstrahls ist die Strahlqualität der OPO-Strahlung im wesentlichen abhängig von der Intensität der Pumpstrahlung, von dem Radius des Pumpstrahls im optisch nichtlinearen Kristall und von der Länge des OPO-Resonators.

Die Strahlqualität von OPOs mit plan-plan Resonator, die mit kurzen Laserimpulsen (von etwa 10 ns Dauer) angeregt werden, wird vor allem dadurch begrenzt, daß sich während der wenigen Umläufe der erzeugten OPO-Impulse im Resonator keine zeitlich stationäre transversale Modenstruktur ausbildet. Zur Verbesserung der transversalen Modenqualität gepulster OPOs werden statt plan-plan Resonatoren optisch instabile Resonatoren verwendet [B.C. Johnson, V.J. Newell, J.B. Clark, and E.S. McPhee, J.Opt.Soc. Am.B 12,2122 (1995)] oder in einem OPO mit Typ-I Phasenanpassung eine zweifach nichtkollineare Pumpgeometrie benutzt [C.D. Nabors and G. Frangineas, OSA Trends in Optics and Photonics Vol.10, Advanced Solid State Lasers, C.R. Pollock and W.R. Bosenberg, eds. (Optical Society of America, Washington, DC 1997), pp. 90-93].

Die Strahlqualität von Quellen kohärenter Strahlung kann durch Angabe eines Faktors M² charakterisiert werden, dessen Bestimmung [in ISO/DIS-Norm 11146:1995] festgelegt ist. Dieser Faktor charakterisiert einen Strahl mit im Prinzip beliebiger Intensitätsverteilung in Relation zu einem beugungsbegrenzten Gaußschen Strahl (M²=1). Der Wert des Faktors M² nimmt mit abnehmender Strahlqualität zu. Für viele Anwendungen ist vor allem die Strahldivergenz ein wichtiger Strahlparameter, dessen Bestimmungsmethode ebenfalls [in ISO/DIS-Norm 11146:1995] festgelegt ist. Zur Charakterisierung der Strahlqualität eines OPO ist eine Unterscheidung zwischen der Ebene, innerhalb der die Phasenanpassung stattfindet (der sogenannten Phasenanpassungsebene), und der Ebene senkrecht zu dieser von Bedeutung, da der Parameter M² und die Strahldivergenz in diesen Ebenen im allgemeinen unterschiedliche Werte besitzen.

Die spektrale Breite der Strahlung eines gepulsten OPO wird vor allem von der Bandbreite des parametrischen Verstärkungsprozesses und der Divergenz der OPO-Strahlung bestimmt [R. Urschel, U. Bäder, A. Borsutzky and R. Wallenstein, OSA Trends in Optics and Photonics Vo.10, Advanced Solid State Lasers, C.R. Pollock and W.R. Bosenberg, eds., Optical Society of America, Washington, DC 1997, pp.94-96]. Bei kollinearer Typ-I Phasenanpassung (d.h. bei kollinearer Ausbreitung von Pumpstrahl und resonantem OPO-Strahl) ist der Einfluß der Verstärkungsbandbreite auf die spektrale Breite des OPO dominierend.

Optisch-parametrische Oszillatoren mit Typ-II Phasenanpassung sind aus folgendem Stand der Technik bekannt: Appl. Phys. Lett. 56 (19), 07.05.1990, Seiten 1819 - 1821; Optics Letters Vol. 19, No. 21, Nov. 1., 1994, Seiten 1735 - 1737; Appl. Phys. Lett. 64 (12), 21.03.1994, Seiten 1490 - 1492 und US-Patent 5 400 173.

Zur Definition von OPO's der Phasenanpassungs-Typen I und II wird auf U.S.-Patent 5 033 057 verwiesen.

OPOs mit Anregung aus mindestens zwei Pumpstrahlen finden sich in FR 2 743 904 und J. Opt. Soc. Am. B, Vol 12, No. 11, Nov. 1995, Seiten 2122 - 2127.

Bei kollinearer Typ-II Phasenanpassung hat die Divergenz der OPO-Strahlung in der Ebene der Phasenanpassung einen wesentlichen Einfluß auf die spektrale Breite des OPO [R. Urschel, U. Bäder, A. Borsutzky and R. Wallenstein, OSA Trends in Optics and Photonics Vo.10, Advanced Solid State Lasers, C.R. Pollock and W.R. Bosenberg, eds.,Optical Society of America, Washington, DC 1997, pp.94-96]. Je nach optischer Konfiguration des OPO, kann der Einfluß der Divergenz den der Verstärkungsbandbreite um mehr als eine Größenordnung übertreffen. Die Verbreiterung des Spektrums der OPO-Strahlung resultiert dann aus einer spektralen Verschiebung der parametrischen Verstärkung in Abhängigkeit von der Ausbreitungsrichtung. Denn innerhalb der Phasenanpassungsebene bewirken kleine Abweichungen (Δθ) der Ausbreitungsrichtung der resonantnen OPO-Welle von der Richtung (Δθ=0) der optischen Achse des OPO-Resonators bereits eine erhebliche spektrale Verschiebung Δλ der parametrischen Verstärkung. Die Verschiebung Δλ gibt die Differenz zur zentralen Wellenlänge der resonanten OPO-Strahlung an.

Gepulste OPOs mit Kristallen mit Typ II Phasenanpassung, die von Pumpimpulsen zweimal, in entgegengesetzter Richtung angeregt werden, sind in der Literatur beschrieben.

W. R. Bosenberg und R. H. Jarman beschrieben einen OPO mit einem Typ II phasenangepaßten Kristall aus KNbO₃ mit Pumprückreflektion. (W. R. Bosenberg and R. H. Jarman, Typ II, phase-matched KNbO₃ optical parametric oscillator, Optics Letters, Vol. 18, S. 1323, 1993).

Der OPO wird mit der 1064 nm Grundwelle eines Nd-YAG Lasers angeregt und ist daher im Prinzip für die Erzeugung von Signal- und Idlerstrahlung im nahen Infrarot (1.4 - 4.2 µm) geeignet. In KNbO₃ ist Typ II-Phasenanpassung nur außerhalb der optischen Hauptebenen möglich. Die effektive Nichtlinearität, ausgedrückt durch den Koeffizienten d_{eff}, ist äußerst klein. Der Wert dieses Koeffizienten ist um fast eine Größenordnung kleiner als für Phasenanpassung vom Typ I. Auf Grund der kleinen Nichtlinearität ist die benötigte Pumpleistungsdichte an der Schwelle entsprechend hoch. Tatsächlich konnte der OPO nur mit einer einzigen räumlichen Orientierung des Kristalls (d. h. bei einer Signal- und Idlerwellenlänge von 1,87 µm und 2,47 µm) betrieben werden, bei der die Flächen des benutzten Kristalls senkrecht zur Resonatorachse standen. Bei dieser Orientierung des Kristalls sind die vom Kristall verursachten resonatorinternen optischen Verluste minimal. Eine Abstimmung der Wellenlänge der vom OPO erzeugten Strahlung war damit nicht möglich. Der Kristall wurde von den Pumpimpulsen zweimal durchlaufen mit dem Ziel, die OPO-Schwelle herabzusetzen. Ohne Pumprückreflektion wäre mit der im Experiment benutzten Pumpleistungsdichte die Schwelle, d. h. OPO Oszillation nicht erreicht worden.

Ein OPO aus Beta-Bariumborat mit Typ II Phasenanpassung und Pumprückreflektion wird von S. Wu, G. A. Blake, Z. Sun und J. Ling beschrieben. (S. Wu, G. A. Blake, Z. Sun and J. Ling, Simple, high-performance type II β-BaB₂O₄ optical parametric oscillator, Applied Optics, Vol. 36, S. 5898, 1997).

Die Motivation für die Pumprückreflektion war wiederum die Herabsetzung der OPO-Schwelle. Dieser OPO enthält zwei Kristalle aus Beta-Bariumborat, die so orientiert sind, daß der walk-off zwischen Pump- und resonanter Idlerwelle im ersten Kristall durch den entsprechenden walk-off im zweiten Kristall kompensiert wird. Diese walk-off Kompensation verbessert - wie aus der Physik des OPO bekannt - die Strahlqualität. Die Verwendung von zwei Kristallen trägt auch zur Reduzierung der spektralen Breite der erzeugten OPO Strahlung bei.

Die Verwendung von zwei Kristallen hat jedoch wesentliche Nachteile. Erstens wird das System vom Aufbau her komplexer und damit teurer. Zweitens müssen die räumlichen Orientierungen von beiden Kristallen exakt aufeinander abgestimmt werden, so daß die parametrische Verstärkung in beiden Kristallen bei exakt der gleichen Wellenlänge erfolgt. Während in der Praxis die optimale Orientierung für beide Kristalle für eine bestimmte Wellenlänge noch in einem iterativen Prozeß z. B. manuell eingestellt werden kann, erfordert die kontinuierliche Abstimmung der OPO Wellenlängen eine exakte Synchronisation der gegensinnigen Drehungen von beiden Kristallen. Diese schwierige Synchronisation dürfte im allgemeinen nur mit einer aktiven elektronischen Regelung der Kristallorientierungen zu bewerkstelligen sein.

Der Erfindung liegt die Aufgabe zugrunde, die Strahlqualität von gepulsten OPOs mit Typ-II Phasenanpassung auf möglichst einfache Weise zu verbessern und dabei gleichzeitig die spektrale Breite der erzeugten Signal- und Idlerstrahlung zu reduzieren.

Die erfindungsgemäße Verwendung eines optisch-parametrischen Oszillators ist im Patentanspruch 1 gekennzeichnet.

Der OPO, der zur erfindungsgemäßen Lösung der Aufgabe benutzt wird, enthält bevorzugt nur einen Kristall aus Beta-Bariumborat. Damit ist die Wellenlänge des OPO durch Drehen des Kristalls auf einfache Weise abstimmbar. Die Phasenanpassung vom Typ II erfolgt in der optischen Hauptebene. Die so erreichte optische Nichtlinearität ist ausreichend für einen effizienten Betrieb im gesamten Abstimmbereich.

Bei Phasenanpassungen, insbesondere vom Typ II, ist die Orientierung des Kristalls nie völlig exakt, Abweichungen von einigen Grad sind durchaus üblich und tolerierbar. Beispiele für Kristalle, mit denen die Erfindung verwirklicht werden kann, sind Bariumborat, KTP, LBO und weitere.

Der zusätzliche kollineare Durchgang der Pumpstrahlung durch den optisch nichtlinearen Kristall hat die folgenden Vorteile:

Während des zweiten Kristalldurchgangs der Pumpstrahlung haben die Anteile der resonanten OPO-Strahlung, die beim ersten Durchgang eine positive Winkelabweichung Δθ zur Resonatorachse aufweisen, eine negative Winkelabweichung mit dem gleichen Betrag (und umgekehrt). Die spektrale Verschiebung Δλ der parametrischen Verstärkung hat daher während des ersten Durchgangs das entgegengesetzte Vorzeichen wie beim zweiten Durchgang.

Die Gesamtverstärkung für den vor- und rückläufigen Pumpstrahldurchgang ist daher nur für die Ausbreitungsrichtungen der resonanten OPO-Strahlung, die nicht oder nur minimal von der Resonatorachse abweichen, maximal. Ausbreitungsrichtungen der resonanten OPO-Strahlung, die von der Resonatorachse stärker abweichen, erfahren eine wesentlich geringere Gesamtverstärkung und werden somit unterdrückt. Dies hat zur Folge, daß
(1) die Strahlqualität der OPO-Strahlung in der Phasenanpassungsebene verbessert wird und
(2) die spektrale Breite der OPO-Strahlung abnimmt.

Nachfolgend werden Ausführungsbeispiele und mit der Erfindung erzielte Ergebnisse unter Bezugnahme auf die Zeichnung näher beschrieben. Es zeigt:
Fig.1 schematisch einen OPO mit Typ-II Phasenanpassung zur Verwendung gemäß der Erfindung;
Fig.2 a die spektrale Verschiebung Δλ in Abhängigkeit von der Abweichung Δθ der Ausbreitungsrichtung der OPO-Strahlung von der optischen Resonatorachse für einen OPO mit Typ II Phasenanpassung aus Betabariumborat;

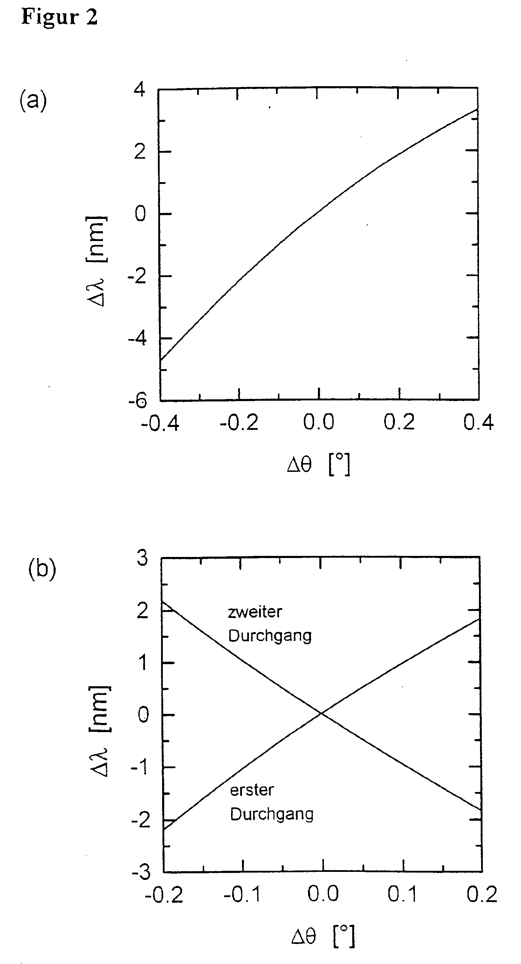

Fig.2 b die spektrale Verschiebung Δλ der parametrischen Verstärkung über der Abweichung Δθ der Ausbreitungsrichtung der OPO-Strahlung von der optischen Resonatorachse für erste und zweite Durchgänge der Pumpstrahlung.

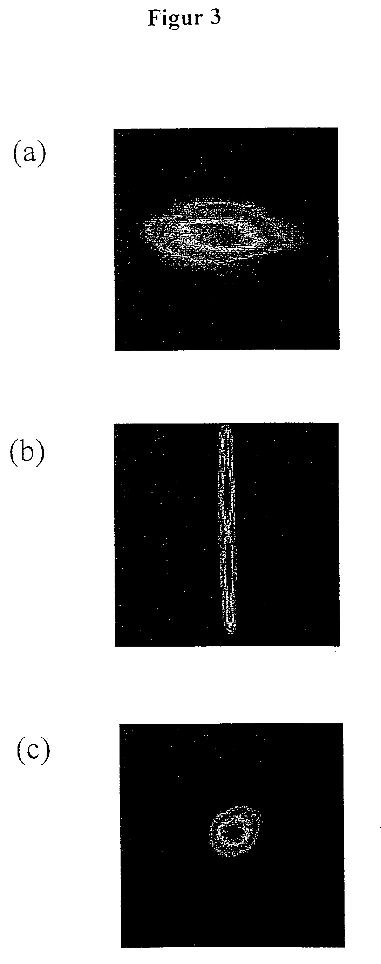

Fig.3 ein Beispiel für gemessene Intensitätsverteilungen im Signalstrahl für einen OPO mit einem Resonator aus zwei Plan-Spiegeln mit einfachem Durchgang der Pumpstrahlung durch den nichtlinearen Kristall (a) sowie mit zweifachem Durchgang durch kollineare Rückreflexion (b); Teil (c) zeigt die Intensitätsverteilung für einen OPO mit zweifachem Durchgang der Pumpstrahlung durch den Kristall und einen Resonator, der aus einem planen Spiegel und einem Prisma besteht.

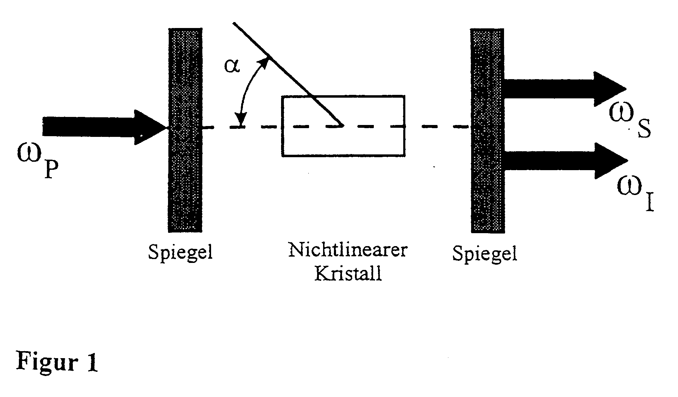

Fig.1 zeigt schematisch die Komponenten eines OPO aus Betabariumborat (BBO) mit Typ-II Phasenanpassung.

Dieser OPO besteht aus zwei planen Spiegeln, die einen Resonator bilden, der resonant ist für die Signalwelle, und einem 12 mm langen BBO-Kristall. Der OPO wird mit der dritten Harmonischen (355 nm) eines gütegeschalteten Nd:YAG-Lasers angeregt.

Bei den Ergebnissen gemäß Fig.2 wird ein OPO aus Betabariumborat mit Typ-II Phasenanpassung (Pumpwellenlänge 355 nm, Signalwellenlänge 500 nm) verwendet. Dargestellt ist die spektrale Verteilung Δλ der parametrischen Verstärkung der resonanten OPO-Strahlung in Abhängigkeit von der räumlichen Abweichung Δθ der Ausbreitungsrichtung der OPO-Strahlung innerhalb der Phasenanpassungsebene. Δλ wird bezogen auf die zentrale Signalwellenlänge von 500 nm (Δλ=0), Δθ auf die Richtung der optischen Resonatorachse (Δθ=0). Die Werte von Δλ wurden berechnet für einen einfachen Durchgang (a) und einen zweifachen Durchgang (b) der Pumpstrahlung durch den OPO-Kristall.

In Fig.2 a ist diese spektrale Verschiebung Δλ in Abhängigkeit von der Abweichung Δθ der Ausbreitungsrichtung der OPO-Strahlung von der optischen Resonatorachse beispielsweise für einen OPO aus Betabariumborat dargestellt. Aufgrund der räumlichen Divergenz des resonanten OPO-Strahls treten im Strahl gleichzeitig (in einem bestimmten Winkelbereich) Abweichungen Δθ zur Richtung der Resonatorachse auf. Die zugehörige spektrale Verschiebung der verstärkten OPO-Strahlung bewirkt eine Vergrößerung der spektralen Breite des OPO.

Bei einem einmaligen Durchgang der Pumpstrahlung hat die resonante Signalstrahlung des OPO (mit einer Wellenlänge von 525 nm) eine spektrale Breite von 0,5 nm. Ihr M²-Wert beträgt in der Phasenanpassungsebene 20 (Strahldivergenz: 2,8 mrad) und in der dazu senkrechten Ebene 10 (Strahldivergenz: 1,7 mrad). Bei einem zweifachen Durchgang der Pumpstrahlung durch kollineare Rückreflexion reduziert sich die spektrale Breite der resonanten Signalstrahlung auf 0,08 nm. Ihr M²-Wert beträgt dann in der Phasenanpassungsebene 4 (Strahldivergenz: 0,4 mrad) und in der dazu senkrechten Ebene 15 (Strahldivergenz: 2,9 mrad). Die gemessene Intensitätsverteilung im Signalstrahl ist in Fig.3 a für einen einfachen Durchgang der Pumpstrahlung und in Fig.3 b für einen zweifachen Durchgang der Pumpstrahlung durch kollineare Rückreflexion gezeigt.

Fig. 3 zeigt die Intensitätsverteilungen im resonanten Signalstrahl des OPO aus Betabariumborat mit Typ-II Phasenanpassung (Pumpwellenlänge 355 nm, Signalwellenlänge 525 nm) für
(a) einfachen Durchgang der Pumpstrahlung
(b) zweifachen Durchgang der Pumpstrahlung durch kollineare Rückreflexion
(c) zweifachen Durchgang der Pumpstrahlung durch kollineare Rückreflexion und mit einem Prisma als Resonatorendspiegel

Eine Verbesserung der Strahlqualität des OPO in der Ebene senkrecht zur Phasenanpassungsebene wird durch die Verwendung eines 90°-Prismas als Endspiegel des OPO-Resonators erreicht. Die brechende Kante des Prismas bildet dabei einen Winkel von 45° zur Phasenanpassungsebene . Die Verwendung des so angeordneten 90°-Prismas als Resonatorendspiegel hat folgenden Vorteil:

Das Prisma spiegelt die resonante OPO-Strahlung an einer Achse entlang seiner brechenden Kante. Die Strahlanteile, die sich beim ersten Kristalldurchgang in einer zur Phasenanspassungsebene senkrechten Ebene ausbreiten, verlaufen beim zweiten Kristalldurchgang in der Phasenanpassungsebene (und umgekehrt). Damit nimmt die Gesamtverstärkung für die OPO-Strahlung auch für die Signalstrahlung, die beim ersten Durchgang eine große Divergenz in der zur Phasenanpassungsebene senkrechten Ebene aufweist, in dem Maße ab, wie deren Ausbreitungsrichtung von der optischen Achse des OPO-Resonators abweicht. Dies hat zur Folge, daß sich die Strahlqualität der OPO-Stahlung auch in der zur Phasenanpassungsebene senkrechten Ebene verbessert.

Die Reflexion an dem in der oben angegebenen Weise angeordneten Prisma beeinflußt die lineare Polarisation der resonanten OPO-Strahlung. Durch das Einbringen einer Halbwellenplatte für die Wellenlänge der resonanten OPO-Strahlung in den OPO-Resonator, positioniert zwischen dem optisch nichtlinearen Kristall und dem Prisma, kann dieser nachteilige Einfluß kompensiert werden.

Messungen an einem OPO aus Betabariumborat (BBO) mit Typ-II Phasenanpässung und einem zweifachen Kristalldurchgang der Pumpstrahlung demonstrieren diese Vorteile. Wie schon erwähnt, beträgt bei einem OPO-Aufbau mit einem planen Resonatorendspiegel der M²-Wert der resonanten Signalstrahlung in der Phasenanpassungsebene 4 (Strahldivergenz: 0,4 mrad) und in der dazu senkrechten Ebene 15 (Strahldivergenz: 2,9 mrad). Mit einem 90°-Prisma als Resonatorendspiegel, dessen brechende Kante um 45° zur Phasenanpassungsebene gedreht ist, beträgt der M² Wert in den beiden Ebenen senkrecht und parallel zur Phasenanpassungsebene 7 (Strahldivergenz: 0,8 mrad). Die zugehörige gemessene Intensitätsverteilung im Signalstrahl für den OPO mit Prisma und resonatorinterner Halbwellenplatte ist in Fig.3 c gezeigt.

## Patentansprüche

1. Verwendung eines optisch-parametrischen Oszillators (OPO), der einen optisch nicht-linearen Kristall mit Typ II-Phasenanpassung in einem Resonator aus zwei Endspiegeln aufweist, wobei die Typ II-Phasenanpassung in einer optischen Hauptebene des Kristalls realisiert ist, zwei Pumpstrahlen den Kristall in entgegengesetzten Richtungen kollinear durchlaufen und einer der Pumpstrahlen aus dem anderen durch Reflexion an einem Endspiegel des Resonators oder an einem zusätzlichen Spiegel, der sich im oder außerhalb des Resonators befindet, hervorgeht, und wobei ein Endspiegel des Resonators des optisch-parametrischen Oszillators aus einem 90°-Prisma besteht, **dadurch gekennzeichnet, dass** die Pumpstrahlen kollinear zur optischen Achse des Resonators verlaufen und dass die brechende Kante des Prismas um 45° gegen die Ebene der Phasenanpassung im optisch nichtlinearen Kristall gedreht ist.

2. Verwendung eines optisch-parametrischen Oszillators gemäß Anspruch 1, **dadurch gekennzeichnet, dass** der optisch nicht-lineare Kristall aus Beta-Bariumborat besteht.

3. Verwendung eines optisch-parametrischen Oszillators nach einem der vorhergehenden Ansprüche,
**dadurch gekennzeichnet, dass** in den Resonator eine Halbwellenplatte eingefügt ist, die eine Drehung der Polarisation in dem Prisma kompensiert.

## Claims

1. Use of an optical parametric oscillator (OPO) comprising a type II phase-matched optically non-linear crystal in a resonant cavity comprising two end mirrors, wherein the type II phasematching is implemented in an optical main plan of the crystal, two pump beams run co-linearly through the crystal in opposite directions, and one of said pump beams originates from the other pump beam by reflection at one of the end mirrors of the resonator or at an additional mirror which is arranged outside the resonator and wherein one end mirror of the resonator of the optical parametric oscillator is a 90°-prism, **characterized in that** the pump beams run parallel with the optical axis of the resonator and that the refracting edge of the prism is rotated by 45° relative to the plane of the phasematching in the optical by non-linear crystal.

2. Use of an optical parametric oscillator according to claim 1, **characterized in that** said optical non-linear crystal is made of beta-bariumborat.

3. Use of an optical parametric oscillator according to one of the preceding claims, **characterized in that** a half-wave-plate is arranged in the resonator for compensating a rotation of the polarisation in the prism.

## Revendications

1. Utilisation d'un oscillateur paramétrique optique (OPO) présentant un cristal optique non-linéaire à accord de phase de type II dans un résonateur constitué de deux miroirs d'extrémité, l'accord de phase de type II s'effectuant dans un plan optique principal du cristal, deux faisceaux de pompage traversant de manière colinéaire et dans des directions opposées le cristal optique non-linéaire, un des faisceaux de pompage provenant de la réflexion de l'autre faisceau sur un miroir d'extrémité du résonateur ou sur un miroir supplémentaire situé à l'intérieur ou à l'extérieur dudit résonateur, et un miroir d'extrémité du résonateur de l'oscillateur paramétrique optique étant constitué d'un prisme à 90°, **caractérisée en ce que** les faisceaux de pompage s'étendent de manière colinéaire par rapport à l'axe optique du résonateur et que le bord réfringent du prisme est tourné de 45° vers le plan d'accord de phase dans le cristal optique non-linéaire.

2. Utilisation d'un oscillateur paramétrique optique selon la revendication 1, **caractérisée en ce que** le cristal optique non-linéaire est constitué de bêta borate de baryum.

3. Utilisation d'un oscillateur paramétrique optique selon l'une des revendications précédentes,
**caractérisée en ce qu'**une plaque demi-onde, qui compense une rotation de la polarisation dans le prisme, est intégrée dans le résonateur.
